# EUROPÄISCHE PATENTANMELDUNG

(11) **EP 0 874 010 A1**
(43) Veröffentlichungstag der Anmeldung: **28.10.1998**
(21) Anmeldenummer: 98106762.2
(22) Anmeldetag: 14.04.1998
(51) Int. Cl.: C08G 18/34, C08G 59/42

(54) **Vernetzer für Epoxidharze bzw. neue Polyisocyanatmodifizierte Polycarbonsäuren**

(30) Priorität: 22.04.1997 DE 19717092
(71) Anmelder: BAYER AG, 51368 Leverkusen (DE)
(72) Erfinder: Schäfer, Walter, Dr., 42799 Leichlingen (DE); Reuter, Knud, Dr., 47800 Krefeld (DE); Müller, Hanns-Peter, Dr., 51519 Odenthal (DE); Meier-Westhues, Hans-Ulrich, Dr., 51379 Leverkusen (DE); Freudenberg, Ulrich, Dr., 50259 Pulheim (DE); Kahl, Lothar, Dr., FRACC Atizapan de Zaragoza (MX)

(57) **Zusammenfassung**

Die Erfindung betrifft neue Polyisocyanat-modifizierte Dicarbonsäurederivate, ein Verfahren zur Herstellung durch Umsetzung von Carboxylgruppen aufweisenden Dicarbonsäure-(poly)anhydriden mit organischen Polyisocyanaten und Wasser, und ihre Verwendung als Härter für Lackbindemittel auf Polyepoxidharz-Basis.

## Beschreibung

Die Erfindung betrifft neue Polyisocyanat-modifizierte Dicarbonsäurederivate, ein Verfahren zur Herstellung durch Umsetzung von Carboxylgruppen aufweisenden Dicarbonsäure-(poly)anhydriden mit organischen Polyisocyanaten und Wasser, und ihre Verwendung als Härter für Lackbindemittel auf Polyepoxidharz-Basis.

Die Umsetzung von Dicarbonsäuren mit Polyepoxidverbindungen führt unter Öffnung des Epoxidrings zu hochpolymeren Produkten. Für bestimmte Anwendungen, wie z.B. in Autodecklacken, sind die Eigenschaften der daraus hergestellten Beschichtungen, wie Schlagzähigkeit und Flexibilität, noch nicht völlig befriedigend.

Aus Emissionsgründen, der Verringerung der Brand- und Explosionsgefahr ist ein Schwerpunkt der Lackentwicklung die Substitution von Lösungsmittel enthaltenden Systemen durch Pulverlacke. Die Beschichtungseigenschaften entsprechen auch hier nicht immer den Kundenwünschen. So zeigen die Beschichtungen oft nicht die gewünschte Chemikalien- und Lösungsmittelbeständigkeit. Dies ist in der Regel zurückzuführen auf eine zu geringe Vernetzungsdichte.

Es war daher die Aufgabe, Lacksysteme, insbesondere Pulverlacksysteme, mit einer verbesserten Chemikalien- und Lösungsmittelbeständigkeit bei guter Schlagzähigkeit zur Verfügung zu stellen. Gegenstand der Erfindung sind daher Härter für Carboxyl-Epoxid-Lacke, insbesondere Pulverlacke, die es ermöglichen, Beschichtungen mit einer verbesserten Chemikalien- und Lösungsmittelbeständigkeit herzustellen.

In der US-A 5 371 167 werden vorteilhafte, Carbonsäuregruppen enthaltende Verbindungen als Härter für Carboxyl-Epoxid-Pulverlacke, die höhere Vernetzungsdichten erzeugen, beschrieben, die aus Hydroxy- bzw. Aminocarbonsäuren und Polyiso-cyanaten hergestellt werden, wobei die Hydroxyl- bzw. Aminogruppe mit der Isocyanatgruppe zur Reaktion gebracht wird Bei dieser Synthese ist besonders darauf zu achten, daß die dualfunktionelle Hydroxy- bzw. Aminocarbonsäure möglichst streng stöchiometrisch zum Einsatz kommt, denn ein Überschuß an Hydroxycarbonsäure bzw. Aminocarbonsäure im Vernetzer vernichtet in einem zu vernetzenden Polyepoxidharz Epoxidgruppen, ohne eine Vernetzung zu bewirken. Ein Überschuß an Polyisocyanaten, besonders solchen einer Funktionalität >2, wiederum reagiert mit den Polycarboxylverbindungen unter Bildung von vernetzten bzw. hochmolekularen Produkten, die bei einem Einsatz als Härter fuhr Epoxidharze hinsichtlich der Ausbildung einer störungsfreien Lackoberfläche von Nachteil sind.

Bekanntlich entstehen bei der Reaktion von Isocyanaten mit Carbonsäuren unter Kohlendioxidentwicklung Amide und Harnstoffe. Die Umsetzung von Polyisocyanaten einer Funktionalität ≥ 2 mit Dicarbonsäuren zur Herstellung von Carboxylgruppen enthaltenden Produkten einer Carboxyfunktionalität ≥ 2 führt bei Annäherung des Umsetzungsverhältnisses der Komponenten bezüglich Carboxyl- und Isocyanatgruppen an den Äquivalenzpunkt, wie dem Fachmann bekannt, zu unerwünschten hochmolekularen bzw. vernetzten unschmelzbaren Derivaten. In Anwesenheit von Anhydridgruppen ist auch mit einer zusätzlichen Vernetzung über Imide, die Umsetzungsprodukte aus Amiden mit Anhydriden, zu rechnen.

In der EP-A 695 771 werden Isocyanat-modifizierte Carbonsäureanhydride beschrieben, die sich besonders als Pulverlackhärter eignen. Mit diesen Anhydridgruppen-enthaltenden Polycarbonsäuren ist eine zusätzliche Vernetzung über die Anhydridgruppen mit den bei der Carboxyl-Epoxid-Reaktion erzeugten Hydroxylgruppen möglich. Von Nachteil ist jedoch, daß durch Zugabe von Isocyanat zum Härter, um beispielsweise die Zähigkeit zu erhöhen, das Molekulargewicht soweit ansteigt, daß es bei der Applikation zu Verlaufsstörungen in der Beschichtung kommen kann.

In der EP-A 695 771 wird weiter beschrieben, daß zur Modifizierung des Härters und zur Regelung des Molekulargewichts organische hydroxyfunktionelle Verbindungen zugesetzt werden können, wobei allerdings Carboxyl- bzw. Anhydridgruppen verbraucht werden und damit das Vernetzungspotential des Härters herabgesetzt wird.

Beim Einsatz von organischen Hydroxylverbindungen einer Funktionalität >1 kommt noch die Bildung höhermolekularer Anteile bzw. die Gefahr der Vernetzung hinzu.

Es wurde nun überraschend gefunden, daß bei der Umsetzung von Polyisocyanaten einer Funktionalität ≥ 2 mit Dicarbonsäuren, die Anhydridgruppen enthalten, durch Zugabe von Wasser niedrigviskos schmelzende Polycarbonsäuren zugänglich sind, die in Kombination mit den üblichen, Epoxidgruppen aufweisenden Lackbindemitteln die Herstellung von hochwertigen Beschichtungsmitteln ermöglichen. Besonders überraschend war, daß die Vernetzung im hydrophoben Reaktionsgemisch durch die Zugabe von Wasser verhindert werden kann.

Gegenstand der Erfindung sind Polyisocyanat-modifizierte Dicarbonsäurederivate, erhältlich durch Umsetzung von organischen Polyisocyanaten mit, bezüglich der NCO/COOH-Reaktion, überschüssigen Mengen an freie Carboxylgruppen aufweisenden Dicarbonsäure(poly)anhydriden und Wasser.

Gegenstand der Erfindung sind insbesondere solche Polyisocyanat-modifizierten Dicarbonsäurederivate, die dadurch gekennzeichnet sind, daß sie einen Gehalt an Carboxylgruppen von 2 bis 40 Gew.%, an Anhydridgruppen (berechnet als C₂O₃) von 0 bis 20 Gew.% und an Stickstoff von 0,1 bis 10 Gew.% aufweisen, und daß sie unter Abspaltung von Kohlendioxid und unter Einhaltung eines NCO/COOH-Äquivalentverhältnisses von 0,1 : 1 bis 0,9 : 1 hergestellte Umsetzungsprodukte sind aus
A) einer Anhydrid-Komponente, bestehend aus mindestens einem, gegebenenfalls im Gemisch mit bis zu 50 Gew.%, bezogen auf das Gesamtgewicht der Komponente A), Dicarbonsäuren der Formel (I)

   HOOC―(CH₂)ₙ―COOH (I),

   vorliegenden, Dicarbonsäure(poly)anhydrid der Formel (II) 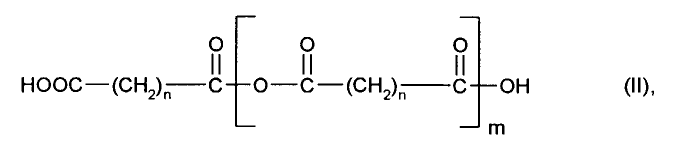
B) einer Polyisocyanat-Komponente, bestehend aus mindestens einem Polyisocyanat
   und
C) Wasser in einem Molverhältnis zu Anhydridgruppen von 0,1 : 1 bis 10 : 1,
   wobei
   - m: für eine ganze Zahl von 1 bis 100 und
   - n: für eine ganze Zahl von 4 bis 16 steht.

Gegenstand der Erfindung ist auch die Verwendung der erfindungsgemäßen Polyisocyanat-modifizierten Dicarbonsäuren als Härter für Lackbindemittel, insbesondere Pulverlackbindemittel, auf Polyepoxid-Basis.

Typische Beispiele für geeignete Dicarbonsäuren der Formel (I) sind z.B. Adipinsäure, Azelainsäure, Sebazinsäure oder 1,12-Dodecandisäure. Ganz besonders bevorzugt sind Adipinsäure und 1,12-Dodecandisäure.

Die diesen Säuren entsprechenden Anhydride der Formel (II) können in an sich bekannter Weise durch Umsetzung der entsprechenden Dicarbonsäure mit Essigsäureanhydrid bei 120 bis 150°C unter anschließender destillativer Entfernung von flüchtigen Bestandteilen aus dem Reaktionsgemisch bei Temperaturen bis 200°C hergestellt werden. Bei dieser Umsetzung werden die Ausgangsmaterialien in Mengenverhältnissen eingesetzt, die einem Molverhältnis von Essigsäureanhydrid zu Dicarbonsäure von mindestens 0,25 : 1, vorzugsweise mindestens 0,5 : 1 und bevorzugt von 0,5 : 1 bis 0,9 : 1 entsprechen.

Als Polyisocyanatkomponente B) eignen sich beliebige organische Verbindungen, die mindestens zwei Isocyanatgruppen pro Molekül aufweisen und ansonsten unter den Reaktionsbedingungen des erfindungsgemäßen Verfahrens inert sind. Geeignet sind beispielsweise aromatische Polyisocyanate, Umsetzungsprodukte von 2,4- und/oder 2,6-Diisocyanatotoluol mit niedermolekularen Polyolen wie beispielsweise Trimethylolpropan, Uretdiongruppen aufweisende Diisocyanate auf Basis von 2,4- und/oder 2,6-Diisocyanatotoluol, Isocyanuratgruppen aufweisende Polyisocyanate auf Basis dieser Diisocyanate, sowie beliebige Gemische der beispielhaft genannten aromatischen Polyisocyanate.

Bevorzugt handelt es sich bei der Polyisocyanatkomponente B) jedoch um organische Polyisocyanate mit (cyclo)aliphatisch gebundenen Isocyanatgruppen des Molekulargewichtsbereichs 168 bis 1000, wie z.B. Hexamethylendiisocyanat (HDI), Isophorondiisocyanat (IPDI), 4,4'-Diisocyanatodicyclohexylmethan oder um bekannte, Biuretgruppen, Isocyanuratgruppen, Uretdiongruppen, Urethangruppen und/oder Allophanatgruppen aufweisende Derivate dieser Diisocyanate. Auch Mischtrimere aus aliphatischen und aromatischen Diisocyanaten, insbesondere aus HDI und 2,4- und/oder 2,6-Diisocyanatotoluol können als erfindungsgemäße Komponente B) eingesetzt werden. Beliebige Gemische der beispielhaft genannten Polyisocyanate können selbstverständlich ebenfalls als Komponente B) Verwendung finden.

Bei der Herstellung der erfindungsgemäß zu verwendenden Polyisocyanat-modifizierten Dicarbonsäurederivaten kommt die Komponente B) in Mengen von 1 bis 60, vorzugsweise 15 bis 40 Gew.%, bezogen auf das Gesamtgewicht der Komponenten A) und B), zum Einsatz, mit der Maßgabe, daß das NCO/COOH-Äquivalentverhältnis bei höchstens 0,9 : 1, vorzugsweise bei 0,2 bis 0,8 liegt. Die Komponente C), das Wasser, kommt in solchen Mengen zum Einsatz, daß das Molverhältnis Wasser zu Anhydridgruppen bei höchstens 10 : 1, vorzugsweise bei 0,2 : 1 bis 1 : 1 liegt.

Die Umsetzung zwischen den Komponenten A) und B) erfolgt im allgemeinen in der Schmelze bei 80 bis 180°C, vorzugsweise bei 95 bis 150°C.

In einem bevorzugten Verfahren wird das in einer Vorlage befindliche Polycarboxyl(poly)anhydrid A) abwechselnd mit Isocyanat B) und Wasser C) versetzt, wobei darauf zu achten ist, daß sich die jeweils an Isocyanat oder Wasser zugesetzte Menge vor einer weiteren Zugabe einer der Komponenten mit dem Polycarboxyl(poly)anhydrid umgesetzt hat, zu erkennen an der Beendigung der CO₂-Entwicklung bzw. Kondenswasserbildung. Die zugesetzte molare Menge an Wasser sollte vor Zugabe der Gesamtmenge an Isocyanat den molaren Gehalt an Anhydridgruppen nicht überschreiten.

Der Gehalt des Härters an freier Säure plus der als Anhydridgebundenen Säure, als Gesamt-Säuregehalt bezeichnet, wird durch Titration nach bekannter Weise in Pyridin mit 1 n NaOH gegen Nilblauchlorid als Indikator bestimmt.

Der Säureanhydridgehalt wird bestimmt aus der Differenz des Gesamt-Säuregehalts einer Probe vor und dem Säuregehalt einer Probe nach der Umsetzung mit einer gegenüber den Anhydridgruppen überschüssigen Menge an n-Propanol bei 110°C.

Der Gehalt an freier Säure im Härter ergibt sich aus der Differenz vom Gesamt-Säuregehalt und Säureanhydridgehalt.

Auch ist gegegenenenfalls die Mitverwendung von organischen Modifizierungskomponenten wie Mono- und Dihydroxyverbindungen oder Monoisocyanaten möglich, die in Mengen von 0 bis 10 Gew.% bezogen auf das Gesamtgewicht der Komponenten A) und B) mitverwendet werden können und in einem solchen Fall im allgemeinen in Abmischung mit der Komponente A) zum Einsatz gelangen. Geeignete Monohydroxyverbindungen sind z.B. Methanol, Ethanol, Butanol, Cyclohexanol, Oktadecanol, geeignete Dihydroxyverbindungen sind z.B. Ethylenglykol, Propylenglykol, Polyethylenglykol, Polypropylenglykol, Butylenglykol, Adipol, geeignete Monoisocyanate sind z.B. Butylisocyanat, Stearylisocyanat, Cyclohexyl-isocyanat.

Die besonders bevorzugten erfindungsgemäßen Verbindungen stellen Reaktionsprodukte von 50 bis 80 Teilen der Komponente A) mit 20 bis 45 Teilen der Komponente B) und 0,5 bis 5 Teilen der Komponente C) dar.

Die erfindungsgemäßen Verbindungen sind als Härter für Lackbindemittel auf Epoxidharz-Basis geeignet. Als Pulverlackhärter für Lackbindemittel auf Epoxidharz-Basis sind insbesondere solche erfindungsgemäße Verbindungen geeignet, die unterhalb 60°C fest und oberhalb 150°C flüssig sind.

Bei der erfindungsgemäßen Verwendung werden die erfindungsgemäßen Härter in Lackbindemitteln auf Epoxidharz-Basis eingesetzt. Die hierbei in Betracht kommenden Lacke bestehen aus diesen Bindemittelkomponenten und können gegebenenfalls weitere übliche Lackbestandteile, wie z.B. Verlaufsmittel, Katalysatoren, Pigmente, Mattierungsmittel oder UV-Schutzmittel, enthalten.

Die Lacke bestehen im allgemeinen aus 10 bis 50 Gew.-% an erfindungsgemäßen Härtern und zu 50 bis 90 Gew.-% aus Epoxidgruppen aufweisenden Bindemitteln, wobei sich die Summe dieser Prozentangaben auf 100 ergänzt, sowie gegebenenfalls aus zusätzlichen Hilfsmitteln der beispielhaft genannten Art.

Bevorzugte Epoxidgruppen aufweisende Bindemittel sind Epoxid-funktionelle Acryl-Polymere, jedoch können auch Polyglycidylether OH-funktioneller Polykondensate eingesetzt werden. Die Epoxid-funktionellen Acryl-Polymere können Copolymere ethylenisch ungesättigter Ester oder Ether mit Epoxid-Gruppen, wie z.B. Glycidylacrylat, Glycidylmethacrylat oder Allylglycidylether mit anderen Estern von Acryl- und Methacrylsäure mit einwertige C₁₋₁₈-Alkoholen und anderen Comonomeren sein. Solche Ester sind z.B. Methyl(meth)acrylat, Ethyl(meth)acrylat, Butyl-(meth)acrylat, Isobutyl(meth)acrylat, Hexyl(meth)acrylat, 2-Ethylhexyl(meth)acrylat, Stearyl(meth)acrylat usw.

Andere mögliche Comonomere ohne Epoxidgruppen sind Styrol, α-Methylstyrol, Vinyltoluol, (Meth)Acrylnitril, Vinyl(iden)halogenide, wie Vinylchlorid, Vinylidenchlorid, Vinylester wie Vinylacetat, Vinylversatat usw.

Der Anteil der Epoxid-funktionellen Monomeren am Aufbau des Acrylpolymeren beträgt vorteilhaft etwa 5 bis 60 Gew.-%, insbesondere 20 bis 50 Gew.-%, bezogen auf die Gesamt-Monomermischung. Das Epoxid-Äquivalentgewicht der Epoxidgruppen aufweisenden Copolymerisate liegt im allgemeinen bei 250 bis 1000.

Die erfindungsgemäßen Härter können selbstverständlich auch in Kombination mit Epoxy-funktionellen Polykondensationsharzen zur Anwendung gelangen. Beispiele hierfür sind die an sich bekannten Umsetzungsprodukte von Epichlorhydrin mit mehrwertigen Phenolen, insbesondere Bisphenol A, oder mit Novolaken auf Phenolbasis.

Als Lösungsmittel für die Härter-Bindemittel-Kombination bei Anwendungen als Flüssiglack sind organische Flüssigkeiten geeignet, die weder Säure- noch Amino-Funktionalität aufweisen, beispielsweise Acetate wie Butylacetat, Hexylacetat, Octylacetat, Glykolether und Glykoletheracetate wie Propylenglykolether, Propylenglykolmonomethylether-acetat, Ketone wie Methylpropylketon, Methylbutylketon, Methylhexylketon oder auch N-Methylpyrrolidon.

Die Lösungen des Lackbindemittels und des erfindungsgemäßen Härters werden getrennt bevorzugt gelagert um eine vorzeitige Umsetzung zu vermeiden. Die Lösungen der Komponenten werden dann erst kurz vor der Applikation gemischt.

Das Lacksprühverfahren ist die bevorzugte Methode, die Reaktionskomponenten auf ein Substrat aufzutragen. Substrate können beispielsweise Metall, Keramik, Glas, Kunststoff oder Holz sein.

Die Herstellung der Pulverlacke aus den genannten Komponenten kann beispielsweise durch deren Homogenisierung in einem Extruder, sowie Aufschmelzen und Mahlen der erstarrten Schmelze erfolgen. Der Auftrag der Pulverlacke erfolgt in an sich bekannter Weise, beispielsweise mittels einer elektrostatischen Sprüheinrichtung.

Die erfindungsgemäßen Pulverlacke weisen im allgemeinen einen Erweichungsbereich innerhalb des Temperaturbereichs von 80 bis 120°C auf.

Die Härtungsbedingungen für die erfindungsgemäßen Beschichtungen liegen bei Einbrenntemperaturen von etwa 120 bis 180°C; bevorzugt werden 130 bis 160°C; die Einbrennzeiten liegen dann - je nach Einbrenntemperatur - zwischen 10 und 40 Min., bevorzugt zwischen 15 und 30 Min.

### Beispiele:

%-Angaben sind stets Gewichtsprozent, Teile sind Gew.-Teile.

### Beispiel 1

a) 1900 Teile Dodecandisäure und 490 Teile Acetanhydrid werden bei 130°C am Rückfluß gehalten. Anschließend wird bei 130°C die entstandene Essigsäure bei 0,3 mbar abgezogen.
b) Zu dem aus 1900 Teilen nach a) hergestellten Dodecandisäureanhydrid werden innerhalb von 45 Min. bei 130°C 450 Teile HDI-Trimerisat eines NCO-Gehalts von 21 % gegeben, und die Reaktionsmischung wird bis zur Beendigung der CO₂-Entwicklung gerührt.
   Anschließend werden 50 Teile Wasser untergerührt und nach 2 Stdn. noch 350 Teile HDI-Trimerisat zugetropft. Nachdem die CO₂-Entwicklung beendet ist, wird durch das Produkt für 2 Stdn. Stickstoff geleitet und danach für 30 Min. Hochvakuum angelegt.
   Das bei 88 bis 97°C schmelzende Produkt hat einen Gehalt an Carboxylgruppen von 17,2 %, an Anhydridgruppen von 3,2 % und an Stickstoff von 2,2 %.

### Beispiel 2

Zu dem aus 1900 Teilen Dodecandisäure nach Beispiel 1a hergestellten Dodecandisäureanhydrid werden innerhalb von 45 Min. bei 130 - 140°C 700 Teile HDI-Trimerisat eines NCO-Gehalts von 21 % gegeben und bis zur Beendigung der CO₂-Entwicklung gerührt (bei 140°C sehr viskoses, gummiartiges Produkt). Es werden 40 Teile Wasser und nach ca. 2 Stdn. noch 300 Teile HDI-Trimerisat zugetropft. Nachdem die CO₂-Entwicklung beendet ist, werden noch 20 Teile Wasser zugegeben, und das Reaktionsprodukt wird 2 Stdn. bei 140°C nachgerührt (bei 140°C dünnflüssiges Produkt). Es wird 2 Stdn. lang Stickstoff durch das Produkt geleitet und danach für 30 Min. Hochvakuum angelegt.

Das bei 92 bis 98°C schmelzende Produkt hat einen Gehalt an Carboxylgruppen von 17,1 %, an Anhydridgruppen von 0,8 % und an Stickstoff von 2,6 %.

### Beispiel 3

Zu dem aus 1900 Teilen Dodecandisäure nach Beispiel 1a hergestellten Dodecandisäureanhydrid werden innerhalb von 45 Min. bei 130°C 450 Teile IPDI-Trimerisat eines NCO-Gehalts von 17,2 % portionsweise zugegeben und bis zur Beendigung der CO₂-Entwicklung gerührt. Es werden 40 Teile Wasser und nach 2 Stdn. noch 350 Teile IPDI-Trimerisat zugefügt. Nachdem die CO₂-Entwicklung beendet ist, werden noch 10 Teile Wasser zugegeben und das Reaktionsprodukt wird 2 Stdn. bei 140°C nachgerührt. Es wird 2 Stdn. lang Stickstoff durch das Produkt geleitet und danach für 30 Min. Hochvakuum angelegt.

Das bei 106 bis 120°C schmelzende Produkt hat einen Gehalt an Carboxylgruppen von 19,0 %, an Anhydridgruppen von 3,4 % und an Stickstoff von 1,8 %.

### Beispiel 4

Zu dem aus 1900 Teilen Dodecandisäure nach Beispiel 1a hergestellten Dodecandisäureanhydrid werden innerhalb von 45 Min. bei 130°C 500 Teile 4,4'-Diisocyanatodicyclohexylmethan gegeben und die Reaktionsmischung bis zur Beendigung der CO₂-Entwicklung gerührt. Es werden 10 Teile Wasser und nach 2 Stdn. noch 100 Teile Dicyclohexylmethan-4,4'-diisocyanat zugefügt. Nachdem die CO₂-Entwicklung beendet ist, wird durch das Produkt 2 Stdn. lang Stickstoff geleitet und danach für 30 Min. Hochvakuum angelegt.

Das bei 88 bis 97°C schmelzende Produkt hat einen Gehalt an Carboxylgruppen von 19,3 %, an Anhydridgruppen von 3,2 % und an Stickstoff von 2,8 %.

### Beispiel 5

Zu dem aus 1900 Teilen Dodecandisäure nach Beispiel 1a hergestellten Dodecandisäureanhydrid werden innerhalb von 45 Min. bei 130°C 500 Teile Isophorondiiso-cyanat gegeben und die Reaktionsmischung bis zur Beendigung der CO₂-Entwicklung gerührt. Es werden 25 Teile Wasser und nach 2 Stdn. noch 100 Teile Isophorondiisocyanat zugefügt. Nachdem die CO₂-Entwicklung beendet ist, wird durch das Produkt 2 Stdn. lang Stickstoff geleitet und danach für 30 Min. Hochvakuum angelegt.

Das bei 88 bis 97°C schmelzende Produkt hat einen Gehalt an Carboxylgruppen von 12,3 %, an Anhydridgruppen von 8,4 % und an Stickstoff von 3,4 %.

### Beispiel 6

Zu dem aus 1900 Teilen Dodecandisäure nach Beispiel 1a hergestellten Dodecandisäureanhydrid werden innerhalb von 45 Min. bei 130°C 600 g Dicyclohexylmethan-4,4'-diisocyanat gegeben und die Reaktionsmischung bis zur Beendigung der CO₂-Entwicklung gerührt. Um die Viskosität zu senken, werden 2 Teile Wasser durch ein Einleitungsrohr in die Reaktionsmischung gegeben und 1 Stde. bei 140°C nachgerührt. Es wird 2 Stdn. lang Stickstoff durch das Produkt geleitet und danach für 30 Min. Hochvakuum angelegt.

Das bei 65 bis 81°C schmelzende Produkt hat einen Gehalt an Carboxylgruppen von 8,6 %, an Anhydridgruppen von 12,7 % und an Stickstoff von 2,9 %.

### Beispiel 7

1200 Teile Adipinsäure und 490 Teile Acetanhydrid werden bis 125°C am Rückfluß gehalten. Anschließend wird bei 125°C die entstandene Essigsäure bei 0,3 mbar abgezogen.

Zu dem aus 1200 Teilen Adipinsäure hergestellten Adipinsäureanhydrid werden innerhalb von 45 Min. bei 120°C 300 Teile HDI-Trimerisat eines NCO-Gehalts von 21 % gegeben, und die Reaktionsmischung wird bis zur Beendigung der CO₂-Entwicklung gerührt. Anschließend werden 25 Teile Wasser untergerührt. Nach 2 Stdn. werden noch 300 Teile HDI-Trimerisat zugetropft. Nachdem die CO₂-Entwicklung beendet ist, werden 75 Teile Wasser zugegeben, und das Reaktionsprodukt wird 2 Stdn. bei 120°C nachgerührt. Es wird durch das Produkt für 2 Stdn. Stickstoff geleitet und danach für 30 Min. Hochvakuum angelegt.

Das bei 80 bis 130°C schmelzende Produkt hat einen Gehalt an Carboxylgruppen von 32 %, an Anhydridgruppen von <1 % und an Stickstoff von 6 %.

### Anwendungsbeipiel:

Für die Lackprüfung werden 69 Teile Polyepoxidharz (Almatex® PD 7610, Polyacrylat-Copolymerisat der Fa. Mitsui Toatsu, Epoxid-Äquiv.-Gew. = 526) und 29 Teile des Härters aus Beispiel 1 zusammen mit einem Teil Zinn-II-octoat und einem Teil Perenol F30P (Verlaufsmittel der Fa. Henkel) gründlich gemischt und anschließend auf einem Kneter der Fa. Buss AG, Basel, Typ PLK 46, homogenisiert. Dabei betrug die Gehäusetemperatur 40°C im Einzugsbereich und 50°C im Verfahrensteil. Die Kneterwelle lief mit 150 U/min. Zur Erzielung optimaler Durchmischung wurde 2 x extrudiert. Die erstarrten Schmelzen wurden mittels einer Sichtermühle, Typ ACM 2, der Fa. Hosokawa-Mikropul, Köln, zu Pulverlacken mit einer Teilchengröße <90 µm gemahlen. Mit einer Elektrostatik-Becherpistole der Fa. ESB wurden die Pulverlacke auf entfettete Stahlbleche gesprüht. Dabei lag eine Hochspannung von 70 kV(-) an. Die Prüfergebnisse der bei 150°C innerhalb von 30 Min. ausgehärteten Beschichtung sind:
- Glanzwert 20°C / 60°C: 86 / 106 (%)
- Erichsentiefung (DIN 53156): >9 (mm)
- Xylol-Wischtest (50 Doppelhübe): ohne Befund
- Aceton-Wischtest (50 Doppelhübe): ohne Befund
- 40 Vol.% Schwefelsäure, 20 Min. bei 60°C: ohne Befund

## Patentansprüche

1. Polyisocyanat-modifizierte Dicarbonsäurederivate, erhältlich durch Umsetzung von organischen Polyisocyanaten mit, bezüglich der NCO/COOH-Reaktion, überschüssigen Mengen an freien Carboxylgruppen aufweisenden Dicarbonsäure-(poly)anhydriden und Wasser.

2. Polyisocyanat-modifizierte Dicarbonsäurederivate, dadurch gekennzeichnet, daß sie einen Gehalt an Carboxylgruppen von 2 bis 40 Gew.-%, an Anhydridgruppen (berechnet als C₂O₃) von 0 bis 20 Gew.-% und an Stickstoff von 0,1 bis 10 Gew.-% aufweisen und daß sie unter Abspaltung von Kohlendioxid und unter Einhaltung eines NCO/COOH-Äquivalentverhältnisses von 0,1:1 bis 0,9:1 hergestellte Umsetzungsprodukte sind aus
A) einer Anhydrid-Komponente, bestehend aus mindestens einem, gegebenenfalls im Gemisch mit bis zu 50 Gew.-%, bezogen auf das Gesamtgewicht der Komponente A), Dicarbonsäuren der Formel (I)
HOOC―(CH₂)ₙ―COOH (1),
vorliegenden, Dicarbonsäure(poly)anhydrid der Formel (II) 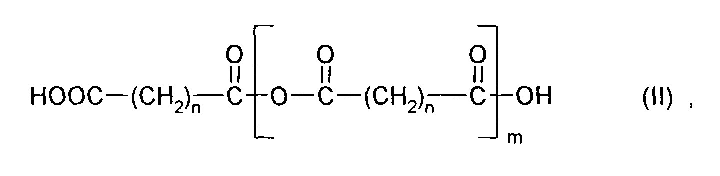
B) einer Polyisocyanat-Komponente, bestehend aus mindestens einem Polyisocyanat
und
C) Wasser in einem Molverhältnis zu Anhydridgruppen von 0,1:1 bis 10:1
wobei
m für eine ganze Zahl von 1 bis 100 und
n für eine ganze Zahl von 4 bis 16 steht.

3. Verfahren zur Herstellung der erfindungsgemäßen Polyisocyanat-modifizierten Dicarbonsäurederivate entsprechend Anspruch 1, dadurch gekennzeichnet, daß Wasser bei >50°C mit dem Umsetzungsprodukt aus Komponente A) und B) so umgesetzt wird, daß das molare Verhältnis von Wasser zu Anhydridgruppen 0,1 bis 10 : 1, bevorzugt 0,2 bis 1 : 1 ist.

4. Verfahren zur Herstellung der erfindungsgemäßen Polyisocyanat-modifizierten Dicarbonsäurederivate entsprechend Anspruch 1, dadurch gekennzeichnet, daß die Komponenten B) und Wasser zu A) abwechselnd und portionsweise zugefügt werden und die Zugabe der Teilmenge an Wasser jeweils erst nach der Umsetzung der Teilmenge der Komponente B) erfolgt.

5. Verwendung der Polyisocyanat-modifizierten Dicarbonsäurederivate gemäß Anspruch 1 als Härter für Lackbindemittel auf Polyepoxid-Basis.

6. Verwendung der Polyisocyanat-modifizierten Dicarbonsäurederivate gemäß Anspruch 1, die unterhalb 60°C fest und oberhalb 150°C flüssig sind, als Härter für Pulverlackbindemittel auf Epoxidharz-Basis.
